# EUROPEAN PATENT SPECIFICATION

(11) **EP 3 671 534 B1**
(45) Date of publication and mention of the grant of the patent: **15.10.2025**
(21) Application number: 18214053.3
(22) Date of filing: 19.12.2018
(51) Int. Cl.: G06V 40/10, G06Q 30/0601, G06V 20/59, G06Q 30/0241

(54) **ELECTRONIC MIRROR DEVICE WITH A CAMERA-DISPLAY ARRANGEMENT AND MOTOR VEHICLE AND METHOD FOR OPERATING THE ELECTRONIC MIRROR DEVICE**
ELEKTRONISCHE SPIEGELVORRICHTUNG MIT EINER KAMERA-ANZEIGEANORDNUNG UND KRAFTFAHRZEUG UND VERFAHREN ZUM BETREIBEN DER ELEKTRONISCHEN SPIEGELVORRICHTUNG
DISPOSITIF DE MIROIR ÉLECTRONIQUE DOTÉ D'UN AGENCEMENT D'AFFICHAGE DE CAMÉRA ET VÉHICULE À MOTEUR ET PROCÉDÉ DE FONCTIONNEMENT DU DISPOSITIF ÉLECTRONIQUE

(43) Date of publication of application: 24.06.2020
(73) Proprietor: AUDI AG, 85045 Ingolstadt (DE); LG Electronics Inc., Youngdungpo-gu Seoul 150-721 (KR)
(72) Inventor: CHUN, Sewon, Seocho-gu Seoul (KR); SONG, Jieun, Songpa-gu Seoul (KR); KIM, Soyoung, Gangseo-gu Seoul (KR); RITTGER, Dr. Lena, 85051 Ingolstadt (DE); MERTENS, Joris, 85051 Ingolstadt (DE)
(74) Representative: Hofstetter, Schurack & Partner

(56) References cited:
- EP-A1- 1 351 172
- JP-A- 2004 086 662
- US-A1- 2007 294 142
- US-A1- 2012 242 865

## Description

The invention is concerned with a motor vehicle that comprises a so-called electronic mirror device comprising a camera-display arrangement. A field-of-view of a camera of the arrangement is directed to a region which is called "viewing region" in the sequel. A display of the arrangement is also facing this viewing region, i.e. the display is designed to display at least one output image to the viewing region. The at least one output image is generated on the basis of at least one camera image generated by the camera. Thus, if a person is standing inside the viewing region facing the camera, this same person will be able to see itself on the display. In other words, the camera-display arrangement constitutes the functionality of a mirror which a person may use for regarding himself or herself.

A vehicle comprising such an electronic mirror is described in US 2016/0082888 A1. According to that document, a vehicle sun visor device may comprise a touchscreen and a camera in a so-called "see-me" arrangement that is a person sitting in a vehicle seat looking at the sun visor device will be filmed by the camera and a display integrated in the sun visor device will show the camera images to the person sitting in the vehicle seat. With the known device the person will only see the pure camera images without any additional information.

A mechanical device for arranging a tablet-PC in a vehicle is described in DE 10 2016 209 168 A1. By arranging a tablet-PC in the vehicle and using the front camera of the tablet-PC, an electronic mirror function could be implemented in the vehicle. However, no link to additional information would be provided.

Document DE 10 2013 009 580 A1 illustrates a vehicle infotainment device that may integrate a tablet-PC such that the tablet-PC may receive additional information from a central storage of the vehicle such as video data for viewing a movie. The tablet-PC may also comprise a camera which may be used for video conferencing. An electronic mirror function is not described in that document.

If an electronic mirror is to be used by a person for guarding himself or herself while wearing for example a new garment or a new accessory (e.g. glasses or a necklace), the person has to put on the garment and/or accessory and step into the viewing region, such that the display will show the appearance of the person. If several such garments and/or accessories shall be tested, the person has to change the garments and/or accessories and step into the viewing region in front of the display of the electronic mirror. Changing garments and/or accessories and checking the appearance each time separately in an electronic mirror is time-consuming.

Document US 2007 / 294 142 A1 describes a system for trying on and comparing clothes in a virtual way, wherein the system receives a photographic picture of a person and manipulates that picture by overlaying image data of clothes. For comparing different apparels, output images showing several different clothes on the same person can be displayed at the same time.

Document EP 1 351 172 A1 describes a system for a clothes shop where a person may try on a garment and regard himself or herself in a mirror while at the same time a camera positioned next to the mirror may take an image of that person. The camera image data may be provided to a computer where an operator may manipulate the image on a computer by overlaying image data of different types of clothes.

Document US 2012 / 242 865 A1 describes a transparent display device that may display pixel images in connection with an augmented reality application and that may also be adaptive in transparency such that it may also act as a non-transparent display. For setting the transparency, an adaptive layer may be provided, wherein by an additional layer a mirror functionality may also be made available.

Document JP 2004 086662 A describes a method for generating manipulated photographs where a person may provide a photograph of himself or herself and on the basis of the method the manipulated photographs will show the person wearing different clothes.

It is an object of the present invention to support a person in trying out several different garments and/or accessories.

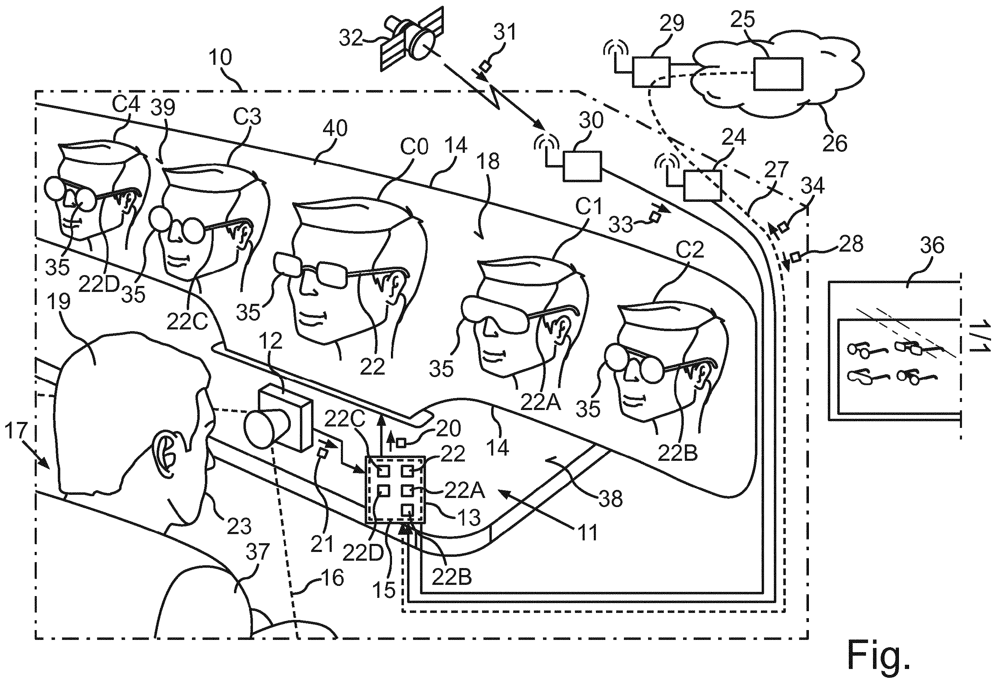

The object is accomplished by the subject matter of the independent claims. Advantageous developments with convenient and non-trivial further embodiments of the invention are specified in the following description, the dependent claims and the Figure.

The invention provides a motor vehicle comprising an electronic mirror device with a camera-display arrangement as has already been described. In other words, a field-of-view of a camera of the arrangement is directed to or captures a viewing region and a display of the arrangement is designed to display at least one output image to the viewing region. A single output image may be a still image, while several output images may constitute a video stream or image sequence. For providing the electronic mirror functionality, the at least one output image is based on at least one camera image generated by the camera. The camera may provide a still image or a sequence of images, i.e. a video stream of images. The camera films or records image data of the person standing in the viewing region. A person standing in the viewing region may regard himself or herself by looking at the display where the at least one output image that is based on the at least one camera image is displayed.

If the electronic mirror device shall be used for trying on several different garments and/or accessories, this is supported in the following way. An image processing unit of the device is designed to receive the at least one camera image from the camera and to perform an object recognition for detecting at least one person in the at least one camera image and to generate the at least one output image on the basis of the at least one camera image. In other words, the camera and the display are interconnected via an image processing unit that may receive the at least one camera image and may generate the at least one output image on the basis of the at least one camera image. The image processing unit is designed to provide, in each of the at least one output image, several copies of at least one body part of the respective at least one detected person in the at least one output image. In other words, if the at least one camera image shows a specific body part of the person, this body part will appear several times in each of the at least one output image. For example, if the person shows a hand or hold the hand in to the viewing region, this hand will be seen or displayed several times in the at least one output image. For example, the several copies may be shown in a row next to each other.

Additionally, the image processing unit is designed to manipulate each copy individually in that an appearance of each copy of the at least one body part is individually manipulated by overlaying a respective different predefined image content over the respective copy. In other words, although several copies are shown, each copy looks different in that another image content is overlaid. Regarding the example of the hand, the image content may show a specific object, for example a wedding ring or a glove. By overlaying the image content over one specific copy of the at least one body part, the object may be projected or overlaid or shown at the body part. A wedding ring may be shown on one finger of the hand. A glove may be shown on top of the hand. For each copy, a different object may be shown each represented as a specific image content. For example, the hand may be shown several times and on each copy of the hand, a different wedding ring and/or a different glove may be shown or overlaid. In other words, the different objects may bo of the same product type (e.g. wedding ring or glove). The image content showing a specific object may be provided in the form of image data that may be added to the image data of the at least one camera image. For example, overlaying image content can be achieved by the so-called alpha-blending.

The invention provides the advantage, that a person does not even have to put off any of the garments and/or accessories that are to be tested. Instead, the person may keep on the clothes he or she is wearing and the person may step into the viewing region and may regard the own appearance in the display. In the display, the at least one output image will show the at least one body part of the person with a changed appearance in that an image content, that is a specific garment and/or accessory, is overlaid. As several copies of the at least one body part are shown and each copy shows is combined with a different image content, the person may try on or test or check the appearance of different garments and/or accessories on the body part in parallel or at the same time. This saves time and reliefs the person from the need of changing clothes and/or accessories.

The device adapts the image content to the environment by itself. To this end, the image processing unit is designed to choose the image content out of several image contents as a function of a current environment that the device is in (as may be detected on the basis of a digital map and/or a sensor input from an environment sensor). Additionally or alternatively the image content is chosen as a function of a driving situation. Such a driving situation may be one out of e.g. driving on a highway, driving overland, driving through a town, a parking phase. Additionally or alternatively the image content is chosen as a function of a driving destination as signaled by a navigation system. For example, the driving destination may be programmed by a user or may be estimated by the navigation system on the basis of the current driving situation.

The invention also comprises embodiments that provide features which afford additional technical advantages.

In one embodiment the display comprises a transparent pixel matrix as a layer on a transparent window and/or on a transparent carrier element. In other words, the display may comprise self-illuminated pixels that may be activated to display the at least one output image on the transparent window and/or transparent carrier element. For example, the display may be arranged in a shop window. By arranging the pixel matrix on a transparent window and/or a transparent carrier element, the display may be arranged in front of a product (garment and/or accessory) that a person may test or try on by using the electronic mirror device. A transparent pixel matrix may be provided on the basis of so-called TOLED (transparent organic light emitting diodes).

In one embodiment, the device comprises a communication module that is designed to receive the respective image content from at least one external data server. The image content shows a product to be carried at and/or worn at the least one body part. In other words, the product can be a garment and/or accessory. One example of such a product are glasses.

In one embodiment, the device comprises a radio communication module that is designed to receive the described additional image content from at least one external data server. Such a radio communication module may be based on a mobile communication module and/or a WIFI module. The image content may show a product that is designed to be carried at and/or worn on the already mentioned at least one body part. For example, such a product may be a pair of glasses or said garment or a ring for a finger. The at least one external data server can be, for example, a shopping server for selling the product. Thus, the device may be used as a platform for selling the product. The device may be designed as a mobile device, for example a mobile phone or a vehicle. If the viewing region is inside a vehicle, a person may do the shopping from inside the vehicle. If the viewing region is arranged at a mobile phone, the phone may be used for offering the product to at least one person passing by a shop that sells the specific product.

In one embodiment the device comprises a locating unit for determining a current geo-position of the device. Such a locating unit can be a receiver for a position signal of a GNSS (global navigation satellite system), e.g. the GPS (global positioning system). The device is designed to signal the current geo-position over the said radio communication module to the at least one data server for receiving a location-specific image content. In other words, the image content that is overlaid over the content of the at least one camera image depends on or is a function of the current geo-position of the device. To this end, the at least one data server may receive the geo-position of the device and may choose the image content from several different image contents as a function of the received geo-position data. This provides the advantage that the image content may be adapted to the environment that the device is currently in.

In one embodiment the image content may be chosen as a function of a shop in front of or near which the device is currently situated. This may be determined on the basis of the current geo-position of the device and/or the device may receive an identification signal or content data describing the image content from a shop or a computer server associated with the shop. The term "near" means less than 500 m, especially less than 250 m away.

The described image content for overlaying may be described by content data. The image content may picture or represent at least one object that is graphically overlaid over the at least one person as pictured in the at least one camera image. The overlay can be achieved by replacing corresponding image pixels in the at least one camera image and/or by the so-called alpha-blending. The image content may depict at least one object, for example a garment or an accessory that may be worn or carried by a person. In one embodiment the image processing unit is designed to detect a shape of the at least one body part whose appearance is to be changed on the basis of the additional image content. Once the shape is estimated or determined, the image processing unit may deform or warp a shape of an object represented by the image content for adapting the shape of the object to the shape of the at least one body part. The object that is represented or pictured by the image content may be, for example, a dress or a garment in general. If the shape of the body part of at least one person is estimated and the shape of the pictured garment is adapted to the shape of the body part, overlaying the adapted shape of the garment will provide a better fit to the shape of the respective body part. This provides a more realistic result of the overlay. The technology for adapting the shape of an object that is represented by image content data, is the so-called warping. Corresponding algorithms are available in the prior art.

In one embodiment the image processing unit is designed to provide a screenshot functionality by storing the at least one output image and/or sending the at least one output image to a predefined internet server, if a predefined user input is received. In other words, the user may trigger or demand the storing and/or sending of the at least one output image. Thus, the user may preserve the at least one output image with the appearance of the at least one body part of the at least one person manipulated or changed on the basis of the image content added by the image processing unit.

By operating the inventive device, a method is performed which is also part of the invention. The method is for operating a camera-display arrangement of a device. As has already been described, a field-of-view of a camera of the arrangement is directed to a viewing region and a display device of the arrangement displays at least one output image to the viewing region. The at least one output image is based on at least one camera image generated by the camera. However, the at least one output image is not identical to the at least one camera image. Instead, an image processing unit of the device receives the at least one camera image from the camera and performs an object recognition for detecting at least one person in the at least one camera image and generates the at least one output image on the basis of the at least one camera image by providing several copies of the at least one body part of the at least one detected person in the at least one output image, wherein an appearance of each copy of the at least one body part is individually manipulated by overlaying a different predefined image content over the respective copy. Thus, an electronic mirror can be provided on the basis of the camera-display arrangement with the additional functionality of multiplying and augmenting the scenery shown in the at least one camera image.

The invention also comprises embodiments of the inventive method that comprise features that correspond to features as they have already been described in connection with the embodiments of the inventive electronic mirror device. For this reason, the corresponding features of the embodiments of the inventive method are not described here again.

The invention also comprises a motor vehicle which may comprise an embodiment of the inventive electronic mirror device. The motor vehicle therefore provides the possibility to a person to use the electronic mirror device for trying out or testing an appearance of the at least one body part in connection with a different product or different models of a product (different garments and/or different accessories). The inventive motor vehicle is preferably designed as a motor vehicle, in particular as a passenger vehicle or a truck, or as a bus or a motorcycle.

The invention also comprises the combinations of the features of the different embodiments.

In the following an exemplary implementation of the invention is described. The figure shows:
- Fig.: a schematic illustration of an embodiment of the inventive motor vehicle.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figure identical reference signs indicate elements that provide the same function.

The single figure Fig. shows a perspective view of an interior of a motor vehicle 10, which can be, for example, a passenger vehicle or a van. The vehicle 10 may comprise an electronic mirror device 11 with a camera-display arrangement comprising a camera 12, an image processing unit 13 and a display 14. The image processing unit 13 may comprise a processing unit 15 that is executing a program module or software module. Camera 12 may be arranged in the vehicle 10 in such a way that a field of view 16 of the camera 12 may be directed towards a viewing region 17 inside vehicle 10. Display 14 may be arranged in such a way that a viewing side or display side 18 of display 14 may be facing towards the viewing region 17. Thus, a user or person 19 in viewing region 17 may regard display 14 such that person 19 may see at least one output image 20 displayed on the viewing side 18 of display 14 while at the same time camera 12 may generate at least one camera image 21 of the person 19 standing or sitting in the viewing region 17. The at least one output image 20 may be based on the at least one camera image 21. The at least one camera image 21 may be received by the image processing unit 13.

In the image processing unit 13, image data of several different image contents 22, 22A, 22B, 22C, 22D (in short: 22-22D or 22, 22A,...,22D) may be stored. The respective image content 22, 22A, ..., 22D may each represent or picture a different object, which may each be a product that the person 19 may want to buy. The different objects may each be of a common object type or product type, for example glasses.

The image processing unit 13 may be designed to recognize the presence or image of the person 19 in the at least one camera image 21 and the image processing unit 13 may be designed to generate copies C0, C1, C2, C3, C4 of the image data of at least one body part 23 of the person 19, for example of the face. The at least one output image 20 may show or depict the copies C0, C1, C2, C3, C4 of the at least one body part 23.

Additionally, the image processing unit 13 may be designed to overlay over each copy C0, C1, C2, C3, C4 of the at least one body part 23 a different one of the image contents 22, 22A,...,22D for generating the at least one output image 20.

As person 19 is inside the viewing region 17, the at least one output image 20 will show the at least one body part 23 of person 19 multiple times, however with the appearance of each copy C0, C1, C2, C3, C4 of the at least one body part 23 of person 19 being individually manipulated due to the overlaid respective image content 22, 22A,..., 22D. In the illustrated example, the body part 23 can be the face of person 19 and the image content 22, 22A,..., 22D can be an image of different models of glasses or spectacles such that the at least one output image 20 may show person 19 wearing glasses although in reality person 19 is not wearing glasses at all. As multiple copies C0, C1, C2, C3, C4 of the at least one body part 23 are displayed and each copy C0, C1, C2, C3, C4 shows the at least one body part 23 with different image content 22, 22A,..., 22D, e.g. wearing different glassed, the person 19 can compare the different appearances.

Camera 12 may be arranged next to display 14, for example above or below or at a side of display 14. This provides a good electronic mirror effect in that the viewing angle of camera 12 on the respective person 19 will generate each output image 20 in such a way that it is very similar to a viewing angle of person 19 looking onto a real (reflecting) mirror. Preferably, a distance between the camera 12 and display 14 is smaller than 1 m, especially smaller than 50 cm. Preferably, the image plane of an image sensor of the camera and the image plane of the display 14 have a distance in the direction perpendicular to the image plane of the display 14 that is smaller than one meter, preferably smaller than 50 cm.

Image content 22, 22A,..., 22D may be received over a radio communication module 24, which can be, for example, a mobile communication module (GSM, UMTS, 5G), or a WIFI module. Communication module 24 may be linked to at least one data server 25, which can be, for example, a shopping server for internet shopping. Data server 25 can be part of the internet 26. A communication link 27 between communication module 24 and data server 25 for transferring image content data 28 for defining image content 22, 22A,..., 22D can lead over a mobile communication network 29 in the case that communication module 24 is a mobile communication module.

For defining image content 22, 22A,..., 22D as a function of a current position of device 11, a locating unit 30 of device 11 or vehicle 10 may receive a position signal 31 from a GNSS 32, for example the GPS. Control unit 15 may receive geo-position data 33 indicating the current position of device 11 from locating unit 30 and may signal the geo-position 34 as described by geo-position data 33 to the data server 25. Data server 25 may then choose the image content data 28 as a function of the geo-position 34. Thus, the image content 22, 22A,..., 22D used for generating the at least one output image 20 may be dependent on the geo-position 34 of device 11. For example, if device 11 is positioned in front of a specific shop 36, the image content 22, 22A,..., 22D can be related to products 35 sold in the shop. Thus, display 14 may be used for advertising the products 35 to persons 19. Thus, an image of several products 35, for example glasses, may be overlaid over the at least one body part 23 at the same time, for example the face, as several copies C0, C1, C2, C3, C4 are provided. Thus, person 19 may view and compare the appearance with the products 35. The person 19 can thus experiment with changing between different products 35.

The image processing unit 13 may recognize the presence and/or contour and/or shape of the at least one person 19 and may segment or recognize the body part 23, for example the face or a hand or the torso. Then, the image content 22, 22A,..., 22D may be overlaid at a correct position such that in the at least one output image 20, person 19 is pictured with the image content 22, 22A,..., 22D overlay, such that for example the product 35, for example a garment and/or an accessory, is overlaid over the camera image 21 of person 19. The appearance of the at least one body part 23 is thus changed and the image of the object represented by the image content 22, 22A,..., 22D is also adapted to the shape of the at least one body part 23.

The figure illustrates how the camera-display arrangement of device 11 may be arranged inside a vehicle 10. A viewing region 17 may be arranged at a seat 37, for example a driver seat or a passenger seat. The field of view 16 of camera 12 may be directed to seat 37 such that a person 19 sitting in seat 37 may be filmed by camera 12 and camera images 21 may be processed by image processing unit 13 to generate the at least one output image 20 for display 14. Display 14 can be, for example arranged on a dashboard 38 of vehicle 10. Display 14 may be based on a transparent pixel matrix 39 on a transparent carrier element 40, for example a screen or a glass panel. With pixel matrix 39 deactivated, person 19 may look through the carrier element 40. With pixel matrix 39 activated, the at least one output image 20 may be displayed, showing person 19 as filmed by camera 12 with the image content 22, 22A,..., 22D overlaid over the respective copy C0, C1, C2, C3, C4 of the at least one body part 23, for example the face.

Electronic mirror device 11 may also be provided in an environment other than a vehicle 10. For example, an electronic mirror device 11 may be provided inside a shop and/or in a shop window. Electronic mirror device 11 may also be a mobile device, for example a mobile phone or a tabled PC.

By overlaying image content 22, 22A,..., 22D over the at least one camera image 21 for generating the at least one output image 20, the camera-display arrangement of device 11 provides at least one augmented camera image in display 14. By choosing image content 22, 22A,..., 22D, the augmentation can be provided for at least one of the following use cases:
Animations and entertaining presentations for children, for example comic characters, that make entering the device attractive and/or entertain a child during a drive.

Visualization in the context of shopping, for example the presentation of a product, for example clothes and/or accessories worn at the body of the customer or person. This can be performed for products already bought or for an online-shopping product.

This may support a person when deciding which product to shop.

The device provides a camera and an image processing unit 13 for example with an augmented reality algorithm, and a display. The camera and the display may be arranged in such a way, that the viewing region is arranged outside a vehicle or inside a device. Over a communication link, for example an internet link, it is also possible to share a screenshot, that is at least one of the at least one output image 20, online.

For detecting at least one person 19 in the at least one camera image 21, an algorithm as available in the prior art may be used. The algorithm may be based on at least one neural network.

Overall, the example shows how an electronic mirror device 11 is provided by the invention.

## Claims

1. Motor vehicle (10) comprising an electronic mirror device (11) with a camera-display arrangement, wherein a field-of-view of a camera (12) of the arrangement is directed to a viewing region (17) and a display (14) of the arrangement is designed to display at least one output image (20) to the viewing region (17), wherein the at least one output image (20) is based on at least one camera image (21) generated by the camera (12), wherein an image processing unit (13) is designed to receive the at least one camera image (21) from the camera (12) and to perform an object recognition for detecting at least one person (19) in the at least one camera image (21) and to generate the at least one output image (20) on the basis of the at least one camera image (21) by providing several copies (C0, C1, C2, C3, C4) of at least one body part (23) of the at least one detected person (19) in each of the at least one output image (20), wherein an appearance of each copy (C0, C1, C2, C3, C4) of the at least one body part (23) is individually manipulated by overlaying a different predefined image content (22, 22A, 22B, 22C, 22D) over the respective copy (C0, C1, C2, C3, C4), wherein the image processing unit (13) is designed to choose the image content (22, 22A, 22B, 22C, 22D) out of several image contents as a function of
- a current environment that the device (11) is in and/or
- a driving situation and/or
- a driving destination as signaled by a navigation system.

2. Motor vehicle (10) according to claim 1, wherein the display (14) comprises a transparent pixel matrix (39) as a layer on a window and/or on a transparent carrier element (40).

3. Motor vehicle (10) according to any of the preceding claims, wherein the device (11) comprises a communication module (24) that is designed to receive the respective image content (22, 22A, 22B, 22C, 22D) from at least one external data server (25), wherein the respective image content (22, 22A, 22B, 22C, 22D) shows a product (35) to be carried at and/or worn on the at least one body part (23).

4. Motor vehicle (10) according to claim 3, wherein the device (11) comprises a locating unit (30) for determining a current geo-position (34) of the device (10) and the device (10) is designed to signal the current geo-position (34) over the communication module (24) to the at least one data server (25) for receiving location specific image content (22, 22A, 22B, 22C, 22D).

5. Motor vehicle (10) according to any of the preceding claims, wherein the image processing unit (13) is designed to choose the image content (22, 22A, 22B, 22C, 22D) out of several image contents as a function of a shop (36), if the device is arranged in front of the shop (36) or within a predefined distance of the shop (36).

6. Motor vehicle (10) according to any of the preceding claims, wherein the image processing unit (13) is designed to detect a shape of the at least one body part (23) and to deform a shape of an object represented by the respective image content (22, 22A, 22B, 22C, 22D) for adapting the shape of the object to the shape of the at least one body part (23).

7. Motor vehicle (10) according to any of the preceding claims, wherein the image processing unit (13) is designed to provide a screenshot functionality by storing the at least one output image (20) and/or by sending the at least one output image (20) to a predefined internet server, if a predefined user input is received.

8. Method for operating a camera-display arrangement of an electronic mirror device (11) comprised by a motor vehicle (10), wherein a field-of-view (16) of a camera (12) of the arrangement is directed to a viewing region (17) and a display (14) of the arrangement displays at least one output image (20) to the viewing region (17), wherein the at least one output image (20) is based on at least one camera image (21) generated by the camera (12), wherein an image processing unit (13) of the device (11) receives the at least one camera image (21) from the camera (12) and performs an object recognition for detecting at least one person (19) in the at least one camera image (21) and generates the at least one output image (20) on the basis of the at least one camera image (21) by providing several copies (C0, C1, C2, C3, C4) of the at least one body part (23) of the at least one detected person (19) in each of the at least one output image (20), wherein an appearance of each copy (C0, C1, C2, C3, C4) of the at least one body part (23) is individually manipulated by overlaying a different predefined image content (22, 22A, 22B, 22C, 22D) over the respective copy (C0, C1, C2, C3, C4), wherein the image processing unit (13) chooses the image content (22, 22A, 22B, 22C, 22D) out of several image contents as a function of
- a current environment that the device (11) is in and/or
- a driving situation and/or
- a driving destination as signaled by a navigation system.

## Patentansprüche

1. Kraftfahrzeug (10), umfassend eine elektronische Spiegelvorrichtung (11) mit einer Kameraanzeigeanordnung, wobei ein Sichtfeld einer Kamera (12) der Anordnung auf eine Visualisierungsregion (17) gerichtet ist, und eine Anzeige (14) der Anordnung dazu ausgelegt ist, mindestens ein Ausgabebild (20) in der Visualisierungsregion (17) anzuzeigen, wobei das mindestens eine Ausgabebild (20) auf mindestens einem Kamerabild (21) basiert, das von der Kamera (12) generiert wird, wobei eine Bildverarbeitungseinheit (13) dazu ausgelegt ist, das mindestens eine Kamerabild (21) von der Kamera (12) zu empfangen und eine Objekterkennung vorzunehmen, um mindestens eine Person (19) in dem mindestens einen Kamerabild (21) zu detektieren, und um das mindestens eine Ausgabebild (20) basierend auf dem mindestens einen Kamerabild (21) zu generieren, indem mehrere Kopien (C0, C1, C2, C3, C4) mindestens eines Körperteils (23) der mindestens einen detektierten Person (19) in jedem von dem mindestens einen Ausgabebild (20) bereitgestellt werden, wobei ein Vorkommen jeder Kopie (C0, C1, C2, C3, C4) des mindestens einen Körperteils (23) individuell manipuliert wird, indem ein anderer vordefinierter Bildinhalt (22, 22A, 22B, 22C, 22D) in die jeweilige Kopie (C0, C1, C2, C3, C4) eingeblendet wird, wobei die Bildverarbeitungseinheit (13) dazu ausgelegt ist, den Bildinhalt (22, 22A, 22B, 22C, 22D) aus mehreren Bildinhalten zu wählen in Abhängigkeit von
- einer aktuellen Umgebung, in der sich die Vorrichtung (11) befindet, und/oder
- einer Fahrsituation, und/oder
- einem Fahrziel, wie es von einem Navigationssystem angegeben wird.

2. Kraftfahrzeug (10) nach Anspruch 1, wobei die Anzeige (14) eine transparente Pixelmatrix (39) als eine Schicht auf einem Fenster und/oder einem transparenten Trägerelement (40) umfasst.

3. Kraftfahrzeug (10) nach einem der vorhergehenden Ansprüche, wobei die Vorrichtung (11) ein Kommunikationsmodul (24) umfasst, das dazu ausgelegt ist, den jeweiligen Bildinhalt (22, 22A, 22B, 22C, 22D) von mindestens einem externen Datenserver (25) zu empfangen, wobei der jeweilige Bildinhalt (22, 22A, 22B, 22C, 22D) ein Produkt (35) zeigt, das an dem mindestens einen Körperteil (23) zu transportieren und/oder zu tragen ist.

4. Kraftfahrzeug (10) nach Anspruch 3, wobei die Vorrichtung (11) eine Lokalisierungseinheit (30) umfasst, um eine aktuelle Geo-Position (34) der Vorrichtung (10) zu bestimmen, und die Vorrichtung (10) dazu ausgelegt ist, die aktuelle Geo-Position (34) über das Kommunikationsmodul (24) dem mindestens einen Datenserver (25) zu melden, um einen ortsspezifischen Bildinhalt (22, 22A, 22B, 22C, 22D) zu empfangen.

5. Kraftfahrzeug (10) nach einem der vorhergehenden Ansprüche, wobei die Bildbearbeitungseinheit (13) dazu ausgelegt ist, den Bildinhalt (22, 22A, 22B, 22C, 22D) aus mehreren Bildinhalten in Abhängigkeit von einem Geschäft (36) auszuwählen, falls die Vorrichtung vor dem Geschäft (36) oder in einem vordefinierten Abstand von dem Geschäft (36) angeordnet ist.

6. Kraftfahrzeug (10) nach einem der vorhergehenden Ansprüche, wobei die Bildbearbeitungseinheit (13) dazu ausgelegt ist, eine Form des mindestens einen Körperteils (23) zu detektieren und eine Form eines Objekts, das durch den jeweiligen Bildinhalt (22, 22A, 22B, 22C, 22D) dargestellt wird, zu verformen, um die Form des Objekts an die Form des mindestens einen Körperteils (23) anzupassen.

7. Kraftfahrzeug (10) nach einem der vorhergehenden Ansprüche, wobei die Bildbearbeitungseinheit (13) dazu ausgelegt ist, eine Bildschirmkopiefunktion bereitzustellen, indem das mindestens eine Ausgabebild (20) gespeichert wird und/oder das mindestens eine Ausgabebild (20) an einen vordefinierten Internetserver gesendet wird, falls eine vordefinierte Benutzereingabe empfangen wird.

8. Verfahren zum Betreiben einer Kameraanzeigeanordnung einer elektronischen Spiegelvorrichtung (11), die in einem Kraftfahrzeug (10) enthalten ist, wobei ein Sichtfeld (16) einer Kamera (12) der Anordnung auf eine Visualisierungsregion (17) gerichtet ist, und eine Anzeige (14) der Anordnung mindestens ein Ausgabebild (20) in der Visualisierungsregion (17) anzeigt, wobei das mindestens eine Ausgabebild (20) auf mindestens einem Kamerabild (21) basiert, das von der Kamera (12) generiert wird, wobei eine Bildbearbeitungseinheit (13) der Vorrichtung (11) das mindestens eine Kamerabild (21) von der Kamera (12) empfängt und eine Objekterkennung vornimmt, um mindestens eine Person (19) in dem mindestens einen Kamerabild (21) zu detektieren, und das mindestens eine Ausgabebild (20) basierend auf dem mindestens einen Kamerabild (21) generiert, indem mehrere Kopien (C0, C1, C2, C3, C4) des mindestens einen Körperteils (23) der mindestens einen detektierten Person (19) in jedem von dem mindestens einen Ausgabebild bereitgestellt werden, wobei ein Vorkommen jeder Kopie (C0, C1, C2, C3, C4) des mindestens einen Körperteils (23) individuell manipuliert wird, indem ein anderer vordefinierter Bildinhalt (22, 22A, 22B, 22C, 22D) in die jeweilige Kopie (C0, C1, C2, C3, C4) eingeblendet wird, wobei die Bildbearbeitungseinheit (13) den Bildinhalt (22, 22A, 22B, 22C, 22D) aus mehreren Bildinhalten auswählt in Abhängigkeit von
- einer aktuellen Umgebung, in der sich die Vorrichtung (11) befindet, und/oder
- einer Fahrsituation, und/oder
- einem Fahrziel, wie es von einem Navigationssystem angegeben wird.

## Revendications

1. Véhicule à moteur (10) comprenant un dispositif de miroir électronique (11) muni d'un agencement d'affichage à caméra, dans lequel un champ visuel d'une caméra (12) de l'agencement est dirigé vers une région de visualisation (17) et un affichage (14) de l'agencement est conçu pour afficher au moins une image de sortie (20) dans la région de visualisation (17), ladite au moins une image de sortie (20) étant basée sur au moins une image de caméra (21) générée par la caméra (12), une unité de traitement d'image (13) étant conçue pour recevoir ladite au moins une image de caméra (21) de la caméra (12) et pour effectuer une reconnaissance d'objet pour détecter au moins une personne (19) sur ladite au moins une image de caméra (21) et pour générer ladite au moins une image de sortie (20) sur la base de ladite au moins une image de caméra (21) en fournissant plusieurs copies (C0, C1, C2, C3, C4) d'au moins une partie du corps (23) de ladite au moins une personne détectée (19) sur chacune de ladite au moins une image de sortie (20), dans lequel une apparition de chaque copie (C0, C1, C2, C3, C4) de ladite au moins une partie du corps (23) est individuellement manipulée en superposant un contenu d'image (22, 22A, 22B, 22C, 22D) prédéfini différent à la copie respective (C0, C1, C2, C3, C4), l'unité de traitement d'image (13) étant conçue pour choisir le contenu d'image (22, 22A, 22B, 22C, 22D) parmi plusieurs contenus d'image en fonction
- d'un environnement actuel dans lequel se trouve le dispositif (11), et/ou
- d'une situation de conduite, et/ou
- d'une destination de conduite comme signalée par un système de navigation.

2. Véhicule à moteur (10) selon la revendication 1, dans lequel l'affichage (14) comprend une matrice de pixels transparente (39) comme une couche sur une fenêtre et/ou un élément de support transparent (40).

3. Véhicule à moteur (10) selon l'une quelconque des revendications précédentes, dans lequel le dispositif (11) comprend un module de communication (24) qui est conçu pour recevoir le contenu d'image respectif (22, 22A, 22B, 22C, 22D) à partir d'au moins un serveur de données externe (25), le contenu d'image respectif (22, 22A, 22B, 22C, 22D) montrant un produit (35) à transporter et/ou à porter sur ladite au moins une partie du corps (23).

4. Véhicule à moteur (10) selon la revendication 3, dans lequel le dispositif (11) comprend une unité de localisation (30) pour déterminer une géo-position actuelle (34) du dispositif (10), et le dispositif (10) est conçu pour signaler la géo-position actuelle (34) par le module de communication (24) audit au moins un serveur de données (25) pour recevoir un contenu d'image (22, 22A, 22B, 22C, 22D) spécifique à un lieu.

5. Véhicule à moteur (10) selon l'une quelconque des revendications précédentes, dans lequel l'unité de traitement d'image (13) est conçue pour choisir le contenu d'image (22, 22A, 22B, 22C, 22D) parmi plusieurs contenus d'image en fonction d'une boutique (36) si le dispositif est disposé devant la boutique (36) ou à une distance prédéfinie de la boutique (36).

6. Véhicule à moteur (10) selon l'une quelconque des revendications précédentes, dans lequel l'unité de traitement d'image (13) est conçue pour détecter une forme de ladite au moins une partie du corps (23) et pour déformer une forme d'un objet représenté par le contenu d'image respectif (22, 22A, 22B, 22C, 22D) pour adapter la forme de l'objet à la forme de ladite au moins une partie du corps (23).

7. Véhicule à moteur (10) selon l'une quelconque des revendications précédentes, dans lequel l'unité de traitement d'image (13) est conçue pour fournir une fonctionnalité de capture d'écran en stockant ladite au moins une image de sortie (20) et/ou en envoyant ladite au moins une image de sortie (20) à un serveur internet prédéfini si une entrée utilisateur prédéfinie est reçue.

8. Procédé permettant de faire fonctionner un agencement d'affichage à caméra d'un dispositif de miroir électronique (11) contenu dans un véhicule à moteur (10), dans lequel un champ visuel (16) d'une caméra (12) de l'agencement est dirigé vers une région de visualisation (17) et un affichage (14) de l'agencement affiche au moins une image de sortie (20) dans la région de visualisation (17), ladite au moins une image de sortie (20) étant basée sur au moins une image de caméra (21) générée par la caméra (12), dans lequel une unité de traitement d'image (13) du dispositif (11) reçoit ladite au moins une image de caméra (21) de la caméra (12) et effectue une reconnaissance d'objet pour détecter au moins une personne (19) sur ladite au moins une image de caméra (21) et génère ladite au moins une image de sortie (20) sur la base de ladite au moins une image de caméra (21) en fournissant plusieurs copies (C0, C1, C2, C3, C4) de ladite au moins une partie du corps (23) de ladite au moins une personne détectée (19) sur chacune de ladite au moins une image de sortie (20), dans lequel une apparition de chaque copie (C0, C1, C2, C3, C4) de ladite au moins une partie du corps (23) est individuellement manipulée en superposant un contenu d'image (22, 22A, 22B, 22C, 22D) prédéfini différent sur la copie respective (C0, C1, C2, C3, C4), dans lequel l'unité de traitement d'image (13) choisit le contenu d'image (22, 22A, 22B, 22C, 22D) parmi plusieurs contenus d'image en fonction
- d'un environnement actuel dans lequel se trouve le dispositif (11), et/ou
- d'une situation de conduite, et/ou
- d'une destination de conduite comme signalée par un système de navigation.
